# EUROPÄISCHE PATENTSCHRIFT

(11) **EP 2 693 064 B1**
(45) Veröffentlichungstag und Bekanntmachung des Hinweises auf die Patenterteilung: **01.03.2017**
(21) Anmeldenummer: 13176903.6
(22) Anmeldetag: 17.07.2013
(51) Int. Cl.: F16B 47/00

(54) **Saugheber und Dichtflansch für einen Saugheber**
Siphon and sealing flange for a siphon
Dispositif de levage aspirant et bride d'étanchéité pour un dispositif de levage aspirant

(30) Priorität: 01.08.2012 DE 102012107050
(43) Veröffentlichungstag der Anmeldung: 05.02.2014
(73) Patentinhaber: C. & E. Fein GmbH, 73529 Schwäbisch Gmünd-Bargau (DE)
(72) Erfinder: Seebauer, Ralf, 71540 Murrhardt (DE)
(74) Vertreter: Witte, Weller & Partner Patentanwälte mbB

(56) Entgegenhaltungen:
- EP-A1- 1 770 285
- EP-A1- 2 434 169
- DE-A1-102006 020 032
- DE-U1-202010 005 517
- JP-A- 2001 205 586
- JP-U- S5 053 288
- JP-U- S6 438 313
- US-A1- 2011 315 839

## Beschreibung

Die Erfindung betrifft einen Saugheber zur Befestigung eines Gegenstandes auf einer Oberfläche eines Objektes, mit einem gewölbten Sauggehäuse, was zu einer Seite hin mittels einer Saugscheibe abgeschlossen ist, wobei zwischen dem Sauggehäuse und der Saugscheibe ein Hohlraum gebildet ist, und mit einem Spannhebel zum Verkleinern eines Abstandes zwischen dem Sauggehäuse und der Saugscheibe zur Erzeugung eines Saugeffektes, mit einem ringförmigen Dichtflansch, der auf der Saugscheibe festlegbar ist, und mit einer elastischen Dichtfläche zur Anlage an der Oberfläche des Objektes, wobei der Dichtflansch eine im Querschnitt U-förmige Innennut aufweist, die auf den Querschnitt des Außenrandes der Saugscheibe abgestimmt ist, und wobei die Saugscheibe mit ihrem Außenrand in die U-förmige Innennut einsetzbar und daraus lösbar ist.

Ein derartiger Saugheber ist aus der DE 10 2006 020 032 A1 bekannt.

Hierbei ist der Saugheber mit einer besonders weichen Dichtfläche versehen, die eine sichere Abdichtung gewährleisten soll.

Aus der EP 2 434 169 ist ein ähnlicher Saugheber bekannt.

Hierbei dient eine elastische Gummischeibe zur dichtenden Anlage auf der Oberfläche eines Objektes, wobei die elastische Gummischeibe über einen zentralen Schaft mit einem Spannhebel verbunden ist, mit dem ein Saugeffekt innerhalb des Sauggehäuses erzielt werden kann.

Derartige Saugheber sind seit langem bekannt und werden verwendet, um Gegenstände mithilfe eines Saugeffektes in der Regel auf einer glatten, ebenen Oberfläche eines Objektes zu befestigen. Insbesondere bei der Handhabung von Glasscheiben werden solche Saugheber verwendet.

Müssen Fahrzeugscheiben im Falle eines Defektes ausgeglast werden, so wird auch in diesem Fall teilweise mit Saughebern gearbeitet.

Soweit die Oberfläche des Objektes, an dem der Saugheber befestigt werden soll, glatt und eben ist, lässt sich ein ausreichender Saugeffekt ohne Weiteres erzielen. Im Falle von gewölbten Oberflächen lässt sich eine ausreichende Haltekraft jedoch häufig nicht mehr erzielen.

Vor diesem Hintergrund liegt der Erfindung die Aufgabe zugrunde, einen verbesserten Saugheber bereitzustellen, mit dem eine sichere Befestigung sowohl an ebenen Oberflächen als auch an nicht ebenen Oberflächen, wie etwa gewölbten Oberflächen, gewährleistet werden kann. Möglichst soll hierbei ein handelsüblicher Saugheber verwendbar sein, der entsprechend umrüstbar ist.

Diese Aufgabe wird durch einen Saugheber gemäß Anspruch 1 gelöst.

Die Aufgabe der Erfindung wird auf diese Weise gelöst.

Ein Saugheber gemäß dem Stand der Technik kann erfindungsgemäß mit einem ringförmigen Dichtflansch kombiniert werden, um auch an gewölbten Oberflächen oder in anderer Weise unebenen Oberflächen eine sichere Befestigung zu erreichen.

Dabei kann der Saugheber sowohl in seinem Ausgangszustand ohne Dichtflansch verwendet werden, sofern nur eine Befestigung an ebenen Oberflächen erforderlich ist, als auch mit aufgesetztem Dichtflansch verwendet werden, um eine Befestigung an nicht ausreichend ebenen Oberflächen zu ermöglichen.

Der Saugheber mit Dichtflansch ist größer und schwerer als ohne Dichtflansch und ist auch weniger stabil als ohne Dichtflansch. Aus diesem Grund ist eine Verwendung sowohl mit Dichtflansch sinnvoll, etwa wenn es auf die große Flexibilität etwa bei gewölbten Scheiben ankommt. Andererseits ist auch eine Verwendung ohne Dichtflansch sinnvoll, wenn es etwa auf ein geringeres Gewicht, auf eine höhere Stabilität oder auf eine kleinere Saugfläche ankommt, wie es beispielsweise beim Ausglasen von kleinen Seitenscheiben bei Pkws der Fall sein kann.

Der Dichtflansch weist eine ringförmige, U-förmige Innennut zur Befestigung auf einem Außenrand einer Saugscheibe eines Saughebers auf, wobei der Querschnitt der Innennut auf den Querschnitt des Außenrandes des Dichtflansches abgestimmt ist, so dass der Außenrand dichtend in der Innennut aufgenommen ist, und weist eine elastische, nach außen abstehende Dichtfläche zur Anlage an einer Oberfläche eines Objektes auf.

Gemäß einer weiteren Ausgestaltung der Erfindung ist der Dichtflansch zwischen einem Rand des Sauggehäuses und der Saugscheibe dichtend einsetzbar.

In weiter bevorzugter Ausgestaltung der Erfindung weist der Dichtflansch eine gegenüber dem Außenrand der Saugscheibe nach außen hervorstehende Dichtfläche auf.

Um eine ausreichende Flexibilität zu ermöglichen, besteht der Dichtflansch vorzugsweise aus Gummi oder einem gummielastischen Kunststoff.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine perspektivische Ansicht eines erfindungsgemäßen Dichtflansches;
- Fig. 2: eine perspektivische Ansicht eines herkömmlichen Saughebers, der in Kombination mit dem Dichtflansch gemäß Fig. 1 verwendet werden kann;
- Fig. 3: eine perspektivische Ansicht des Saughebers gemäß Fig. 2, bei dem der Dichtflansch gemäß Fig. 1 auf dem Außenumfang der Saugscheibe des Saughebers befestigt ist, und
- Fig. 4: einen vergrößerten Querschnitt durch den Saugheber gemäß Fig. 3 in Anlage an einer Glasfläche.

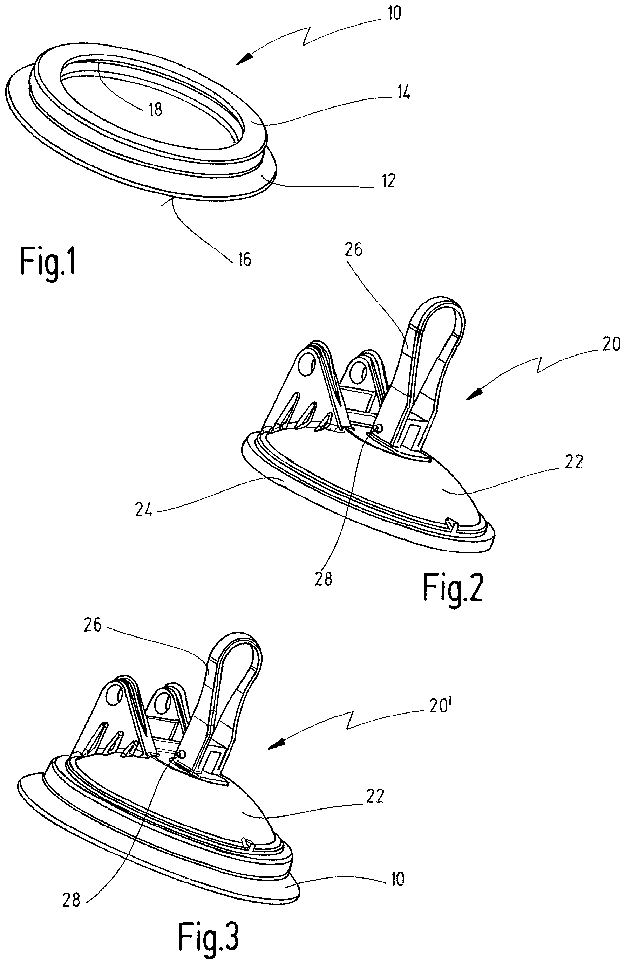

In Fig. 1 ist ein erfindungsgemäßer Dichtflansch perspektivisch dargestellt und insgesamt mit der Bezugsziffer 10 bezeichnet. Der Dichtflansch 10 ist ringförmig ausgebildet und weist einen Dichtabschnitt 12 mit einer ringförmigen, ebenen Oberfläche 16 auf, an den sich ein Befestigungsabschnitt 14 mit einem geringeren Außendurchmesser anschließt, in dem eine ringförmige Innennut 18 vorgesehen ist.

Fig. 2 zeigt eine perspektivische Ansicht eines herkömmlichen Saughebers 20, der in Verbindung mit dem Dichtflansch 10 gemäß Fig. 1 verwendet werden kann.

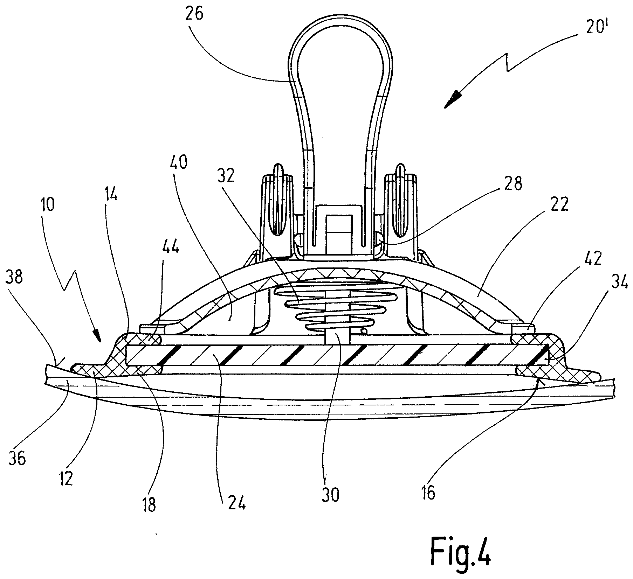

Der Saugheber 20 weist ein nach außen konvex gewölbtes Sauggehäuse 22 aus einem elastischen Material auf, das an seiner Vorderseite mittels einer elastischen Saugscheibe 24 abgeschlossen ist. An der Rückseite des Sauggehäuses 22 befindet sich ein Spannhebel 26, der um eine Schwenkachse 28 verschwenkbar ist, wodurch ein zwischen der Saugscheibe 24 und dem Sauggehäuse 22 eingeschlossener Hohlraum 40 (Fig. 4) verkleinert werden kann, um einen Saugeffekt zu erzielen. Der Saugheber 20 kann somit auf einer glatten ebenen Oberfläche befestigt werden. In Folge der relativ kleinen Saugscheibe 24 ist damit auch noch eine Befestigung etwa an ziemlich kleinen Seitenscheiben von Pkws möglich.

Soll jedoch eine Befestigung an Oberflächen erfolgen, die nicht ausreichend eben sind, so wird hierzu der Dichtflansch 10 gemäß Fig. 4 derart auf den Außenrand 34 der Saugscheibe 24 aufgesetzt, dass die Saugscheibe 24 vollständig innerhalb der U-förmig ausgestalteten Innennut 18 des Dichtflansches 10 gehalten ist. Dabei ist ein dem Sauggehäuse 22 zugewandter Ringsteg 44 am Befestigungsabschnitt 14 des Dichtflansches 10 zwischen einem Rand 42 des Sauggehäuses 22 und der Saugscheibe 24 dichtend eingeschlossen, so dass der Hohlraum 40 innerhalb des Saughebers 20' zwischen dem Sauggehäuse 22, dem Dichtflansch 10 und der Saugscheibe 24 dichtend abgeschlossen ist.

Der Dichtflansch 10 weist an seiner dem Sauggehäuse 22 abgewandten Seite eine ringförmige, ebene Dichtfläche 16 auf, die zur Anlage an der Oberfläche 38 eines Objektes 36 dient.

Im dargestellten Fall kann es sich bei dem Objekt 36 etwa um eine gewölbte Scheibe handeln, an der der Saugheber 20' befestigt werden soll.

In Fig. 4 ist erkennbar, dass die Saugscheibe 24 über einen Stift 30 mit dem Spannhebel 26 an der Rückseite des Saughebers 20' gekoppelt ist, um bei Verschwenken des Spannhebels 26 um die Schwenkachse 28 in eine Arretierungsposition die Saugscheibe 24 gegen die Wirkung einer Feder 32 zum Sauggehäuse 22 hin zu verschieben, so dass der Hohlraum 40 verkleinert wird, um einen Saugeffekt zu bewirken.

Soll der Saugheber 20' ohne den aufgesetzten Dichtflansch 10 verwendet werden, so kann der aus einem ausreichend elastischen Material bestehende Dichtflansch 10 vom Außenrand 34 der Saugscheibe 24 nach außen abgezogen werden. Es ergibt sich dann die Konfiguration des grundsätzlich im Stand der Technik bekannten Saughebers 20 gemäß Fig. 2, der zur Befestigung auf ebenen Oberflächen geeignet ist.

Der Dichtflansch 10 besteht vorzugsweise aus Gummi oder einem gummielastischen Kunststoff von ausreichender Elastizität.

Soll der Dichtflansch 10 in Kombination mit dem Saugheber 20 gemäß Fig. 2 verwendet werden, so wird der Dichtflansch 10 mit seiner Innennut 18 auf den Außenrand 34 der Saugscheibe 24 aufgesetzt und der äußere Ringsteg 44 am Befestigungsabschnitt 14 des Dichtflansches 10 unter den Rand 42 des Sauggehäuses 22 eingeführt, so dass sich die Position gemäß Fig. 4 ergibt.

Da der Saugheber 20' gemäß Fig. 3 bzw. 4 durch den zusätzlich aufgesetzten Dichtflansch 10 vergrößert ist, kann dieser modifizierte Saugheber 20' nicht mehr in allen Anwendungsfällen verwendet werden, etwa wenn besonders kleine Seitenscheiben an Pkws ausgetrennt werden müssen. Aus diesem Grund ist es sinnvoll, den Dichtflansch 10 als auswechselbares Element auszugestalten, so dass eine Verwendung des Saughebers 20 bzw. 20' mit und ohne Dichtflasch 10 möglich ist.

## Patentansprüche

1. Saugheber zur Befestigung eines Gegenstandes auf einer Oberfläche (38) eines Objektes (36), mit einem gewölbten Sauggehäuse (22), das zu einer Seite hin mittels einer Saugscheibe (24) abgeschlossen ist, wobei zwischen dem Sauggehäuse (22) und der Saugscheibe (24) ein Hohlraum (40) gebildet ist, und mit einem Spannhebel (26) zum Verkleinern eines Abstandes zwischen dem Sauggehäuse (22) und der Saugscheibe (24) zur Erzeugung eines Saugeffektes, mit einem ringförmigen Dichtflansch (10), der auf der Saugscheibe (24) festlegbar ist, und mit einer elastischen Dichtfläche (16) zur Anlage an der Oberfläche (38) des Objektes (36), wobei der Dichtflansch (10) eine im Querschnitt U-förmige Innennut (18) aufweist, die auf den Querschnitt des Außenrandes (34) der Saugscheibe (24) abgestimmt ist, **dadurch gekennzeichnet, dass** die Saugscheibe (24) mit ihrem Außenrand (34) in die U-förmige Innennut (18) einsetzbar und daraus lösbar ist, und dass der Saugheber (20) sowohl mit als auch ohne den Dichtflansch (10) dichtend an der Oberfläche (38) des Objektes (36) ansetzbar ist.

2. Saugheber nach Anspruch 1, **dadurch gekennzeichnet, dass** der Dichtflansch (10) zwischen einem Rand (42) des Sauggehäuses (22) und der Saugscheibe (24) dichtend einsetzbar ist.

3. Saugheber nach einem der vorhergehenden Ansprüche, **dadurch gekennzeichnet, dass** der Dichtflansch (10) eine gegenüber dem Außenrand (34) der Saugscheibe (24) nach außen hervorstehende Dichtfläche (16) aufweist.

4. Saugheber nach einem der vorhergehenden Ansprüche, **dadurch gekennzeichnet, dass** der Dichtflansch (10) aus Gummi oder einem gummielastischen Kunststoff besteht.

## Claims

1. Suction lifting tool for fastening an article on a surface (38) of an object (36), the suction lifting tool having a bowed suction housing (22) which is closed off towards one side by means of a suction disc (24), wherein a cavity (40) is formed between the suction housing (22) and the suction disc (24), and having a tension lever (26) for reducing a spacing between the suction housing (22) and the suction disc (24) to generate a suction effect, comprizing a ring-shaped sealing flange (10), which is securable on the suction disc (24), having an inside groove (18) on the sealing flange (10) into which the suction disc (24) is insertable, and further comprising an elastic sealing face (16) for abutment against the surface (38) of the object (36), wherein the sealing flange (10) has an inside groove (18) which is U-shaped in cross section, mated to the cross section of the outside edge (34) of the suction disc (24), **characterized in that** the suction disc (24) with its outside edge (34) is insertable into the U-shaped inside groove (18) and can be released therefrom, and **in that** the suction lifting tool (20) can be attached to the surface (38) of the object (36) in a sealing manner including the sealing flange (10) as well as without the sealing flange.

2. Suction lifting tool according to Claim 1, **characterized in that** the sealing flange (10) is insertable in a sealing manner between an edge (42) of the suction housing (22) and the suction disc (24).

3. Suction lifting tool according to one of the preceding claims, **characterized in that** the sealing flange (10) has a sealing face (16) which protrudes outwards in relation to the outside edge (34) of the suction disc (24).

4. Suction lifting tool according to one of the preceding claims, **characterized in that** the sealing flange (10) consists of rubber or a rubber-elastic plastics material.

## Revendications

1. Dispositif de levage aspirant pour la fixation d'un article sur une surface (38) d'un objet (36), avec un boîtier aspirant courbe (22) qui est terminé d'un côté au moyen d'au moins un disque aspirant (24), une cavité (40) étant formée entre le boîtier aspirant (22) et le disque aspirant (24), et avec un levier de serrage (26) pour réduire une distance entre le boîtier aspirant (22) et le disque aspirant (24) pour produire un effet d'aspiration, avec une bride d'étanchéité de forme annulaire (10) qui peut être fixée sur le disque aspirant (24) et avec une surface d'étanchéité élastique (16) destinée à s'appliquer contre la surface (38) de l'objet (36), la bride d'étanchéité (10) présentant une rainure intérieure (18) de section transversale en forme de U qui est adaptée à la section transversale du bord extérieur (34) du disque aspirant (24), **caractérisé en ce que** le disque aspirant (24) peut être inséré avec son bord extérieur (34) dans la rainure intérieure en forme de U (18) et peut être ressorti de celle-ci et **en ce que** le dispositif de levage aspirant (20) peut être appliqué à la fois avec et sans la bride d'étanchéité (10) de manière hermétique contre la surface (38) de l'objet (36).

2. Dispositif de levage aspirant selon la revendication 1, **caractérisé en ce que** la bride d'étanchéité (10) peut être insérée de manière hermétique entre un bord (42) du boîtier aspirant (22) et le disque aspirant (24).

3. Dispositif de levage selon l'une quelconque des revendications précédentes, **caractérisé en ce que** la bride d'étanchéité (10) présente une surface d'étanchéité faisant saillie vers l'extérieur (16) par rapport au bord extérieur (34) du disque aspirant (24).

4. Dispositif de levage aspirant selon l'une quelconque des revendications précédentes, **caractérisé en ce que** la bride d'étanchéité (10) se compose de caoutchouc ou d'un plastique ayant l'élasticité du caoutchouc.
